# FASCICULE DE BREVET EUROPEEN

(11) **EP 1 526 295 B1**
(45) Date de publication et mention de la délivrance du brevet: **20.12.2006**
(21) Numéro de dépôt: 04300726.9
(22) Date de dépôt: 25.10.2004
(51) Int. Cl.: F16C 11/06

(54) **Dispositif de fixation de cable de commande et cable correspondant**
Vorrichtung zur Befestigung eines Betätigungskabels und dazugehöriges Betätigungskabel
Fixing device for a control cable and corresponding control cable

(30) Priorité: 24.10.2003 FR 0350731
(43) Date de publication de la demande: 27.04.2005
(73) Titulaire: RENAULT S.A.S., 92100 Boulogne Billancourt (FR)
(72) Inventeur: DEVELAY, Christophe, 75012, PARIS (FR); BOUTTIER, Loic, 92310, SEVRES (FR)
(74) Mandataire: Rougemont, Bernard

(56) Documents cités:
- EP-A- 0 589 550
- DE-A- 19 928 302
- DE-U- 20 218 292
- FR-A- 2 634 839
- PATENT ABSTRACTS OF JAPAN vol. 014, no. 373 (M-1009), 13 août 1990 (1990-08-13) -& JP 02 134409 A (NIPPON CABLE SYST INC), 23 mai 1990 (1990-05-23)

## Description

La présente invention concerne un câble de commande, notamment pour mécanisme de changement de vitesses de véhicule automobile.

Plus précisément, elle a pour objet un dispositif de fixation de câble de commande sur organe de commande rigide, comportant une tige solidaire de l'extrémité du câble, un embout de réception de l'entrée de commande et un élément filtrant, comme décrit par exemple dans le document EP-A-0 589 550.

L'invention a également pour objet un câble de commande comportant à au moins une de ses extrémité un tel dispositif de fixation.

Les systèmes de commande par câble, notamment de mécanisme de changement de vitesses, présentent l'inconvénient de faire remonter les vibrations du groupe motopropulseur jusqu'à la commande manuelle, levier ou pommeau de levier pris en main par le conducteur pour commander les changements de rapports.

Une première mesure pour diminuer la remontée des vibrations par un câble de commande de changement de vitesses, est d'intégrer à l'embout de fixation de l'extrémité du câble, un élément filtrant en matériau élastomère.

La masse du câble étant très faible par rapport aux efforts transmis, les commandes par câbles transmettent cependant des vibrations de fréquence relativement élevée.

Pour amortir les vibrations transmises par un câble de commande, il est également connu d'associer une masse aux moyens de fixation de l'extrémité du câble.

Le Patent Abstract of Japan n° 10122226 décrit notamment un dispositif d'amortissement de vibrations transmises par un câble de commande, comportant à cet effet une masse. Selon cette publication, la masse est traversée par le câble à proximité des moyens de fixation de celui-ci. Toutefois les moyens de filtration ne comportent pas d'autre élément filtrant.

La présente invention a pour but d'abaisser la fréquence de coupure, autrement dit la limite inférieure des fréquences non filtrées par un élément filtrant associé aux moyens de fixation d'un câble de commande.

Dans ce but, elle propose un dispositif selon la revendication 1 avec la masse additionelle reliée à l'embout par l'intermédiaire de l'élément filtrant.

De préférence, l'élément filtrant est inséré entre la masse et l'embout.

Ces dispositions permettent notamment d'intégrer la masse et l'élément filtrant, et d'augmenter ainsi la plage de fréquence des vibrations filtrées par le dispositif de fixation.

D'autres caractéristiques et avantages de la présente invention seront mieux compris à la lecture de la description suivante d'un mode de réalisation non limitatif de l'invention, en liaison avec les dessins annexés, sur lesquels :

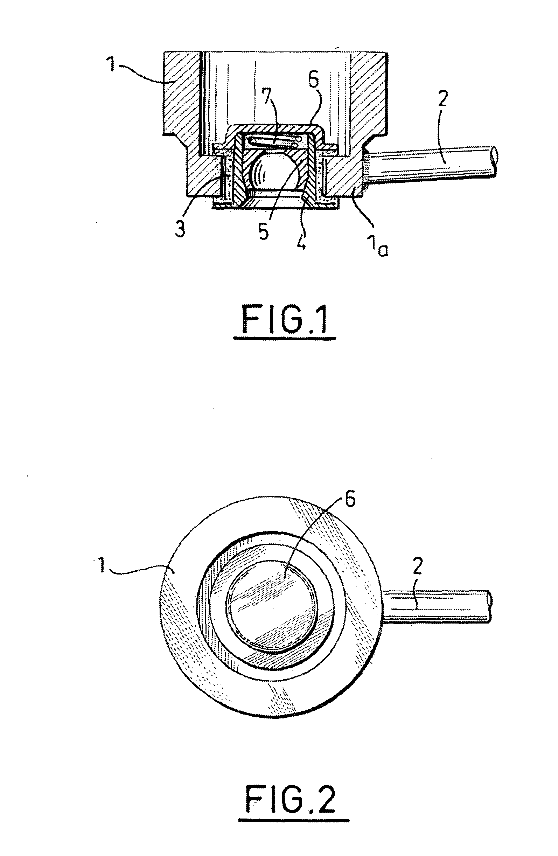

- la figure 1 est une coupe longitudinale du dispositif proposé,
- la figure 2 est une vue de dessous, et

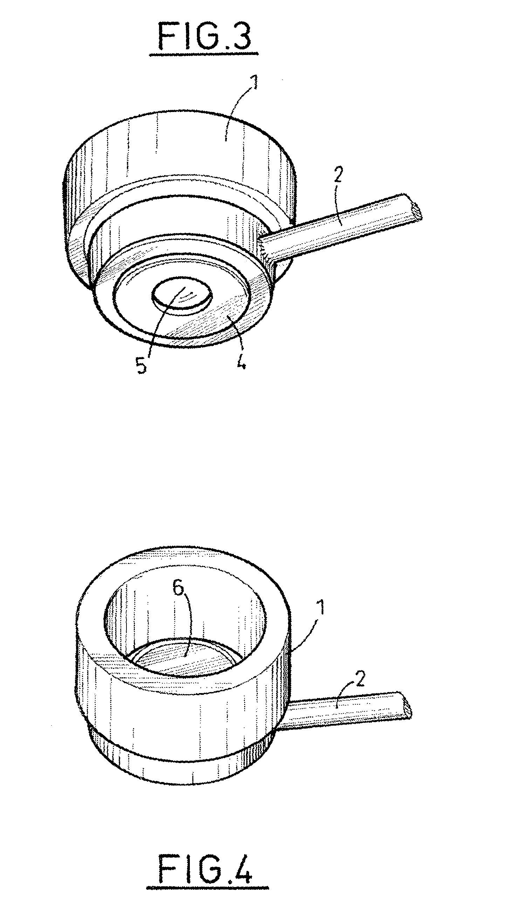

- les figures 3 et 4 sont deux vues extérieures en perspective du même dispositif.

Sur les figures, on voit le système de fixation d'un câble de commande de boîte de vitesses, sur une partie d'extrémité telle qu'une rotule appartenant à un organe de commande rigide constituant de façon générale une entrée de commande, telle qu'une tige appartenant à un module de commande du mécanisme interne de la boîte, ou à un mécanisme de renvoi inférieur de levier changement de vitesses pour la commande en sélection ou en passage des rapports.

Le dispositif de fixation proposé se compose d'une masse 1 solidaire d'une tige 2 dans laquelle est serti un câble (non représenté). La masse 1, qui est soudée sur la tige 2, est reliée à un embout 4 par l'intermédiaire d'un élément filtrant 3, notamment en matériau élastomère.

Conformément aux schémas, la masse 1 peut avoir une forme générale cylindrique, mais cette disposition n'a aucun caractère impératif, et on peut aussi bien adopter d'autres configurations, sans sortir du cadre de l'invention. Par ailleurs, la masse 1 présente un épaulement intérieur la, engagé entre l'embout 4 une coupelle 6. Cette masse additionnelle 1 vise à amortir certaines vibrations transmises par le câble.

L'embout 4 retient par ailleurs un élément de fixation 5 de l'entrée de commande, tel qu'une calotte sphérique capable de retenir par clipsage une rotule (non représentée). La calotte 5, logée dans l'embout 4, permet d'assurer le clipsage du dispositif de fixation sur une entrée de commande, telle qu'une rotule. Enfin, un élément élastique, le ressort 7est mis en contrainte par la coupelle 6 rapportée sur l'embout 4, de manière à exercer l'effort de clipsage de la calotte 5 sur la rotule.

Ainsi, la masse 1 est en appui contre l'embout 4 par l'intermédiaire de l'élément filtrant 3 qui est inséré entre la masse 1, l'embout 4 et la coupelle 6, de manière à réaliser une intégration de la masse et de l'élément filtrant. Comme indiqué ci-dessus, cette disposition revient à augmenter la masse de l'élément filtrant 3 et, par suite, à abaisser la fréquence de coupure du système de filtration mis en oeuvre au niveau du dispositif de fixation du câble sur un organe de commande.

Enfin, on peut prévoir d'adopter un dispositif de fixation conforme à l'invention à l'une quelconque ou aux deux extrémités d'un câble de commande, c'est à dire coté boîte et/ou côté levier de changement de vitesses dans le cas d'un câble de commande de boîte.

## Revendications

1. Dispositif de fixation de câble de commande sur un organe rigide, comportant une tige (2) solidaire de l'extrémité du câble, un embout de réception (4) retenant un élément de fixation (5) de l'entrée de commande, un élément filtrant (3) et une coupelle (6) rapportée sur l'embout (4), **caractérisé en ce qu**'il comporte une masse additionnelle (1) d'amortissement des vibrations reliée à l'embout (4) par l'intermédiaire de l'élément filtrant, et un organe élastique (7) mis en contrainte sur l'élément de fixation (5) par la coupelle (6).

2. Dispositif de fixation selon la revendication 1, **caractérisé en ce que** l'élément filtrant (3) est inséré entre la masse (1) et l'embout (4).

3. Dispositif de fixation selon la revendication 1 ou 2, **caractérisé en ce que** la masse (1) a une forme générale cylindrique.

4. Dispositif de fixation selon la revendication 1, 2 ou 3, **caractérisé en ce que** la masse (1) présente un épaulement intérieur (1a) engagé entre l'embout (4) et la coupelle (6).

5. Câble de commande, **caractérisé en ce qu**'il présente à au moins une de ses extrémités, un dispositif de fixation conforme à l'une des revendications précédentes.

## Claims

1. Device for fixing a control cable to a rigid member, comprising a rod (2) fixedly attached to the end of the cable, a receiving socket (4) retaining a fixing element (5) of the control input, a filtering element (3) and a cup (6) fitted to the socket (4), **characterized in that** it comprises an additional vibration-damping weight (1) connected to the socket (4) by means of the filtering element, and an elastic member (7) placed under stress on the fixing element (5) by the cup (6).

2. Fixing device according to Claim 1, **characterized in that** the filtering element (3) is inserted between the weight (1) and the socket (4).

3. Fixing device according to Claim 1 or 2, **characterized in that** the weight (1) has a generally cylindrical shape.

4. Fixing device according to Claim 1, 2 or 3, **characterized in that** the weight (1) has an internal shoulder (1a) engaged between the socket (4) and the cup (6).

5. Control cable, **characterized in that** it has, at at least one of its ends, a fixing device according to one of the preceding claims.

## Patentansprüche

1. Vorrichtung zur Befestigung eines Betätigungskabels an einem starren Organ, die eine mit dem Ende des Kabels fest verbundene Stange (2), einen Aufnahmestutzen (4), der ein Befestigungselement (5) des Betätigungseingangs hält, ein Filtrierelement (3) und eine auf den Stutzen (4) aufgesteckte Kapsel (6) aufweist, **dadurch gekennzeichnet, dass** sie eine zusätzliche Masse (1) zur Dämpfung von Vibrationen, die über das Filtrierelement mit dem Stutzen (4) verbunden ist, und ein elastisches Organ (7), das durch die Kapsel (6) auf dem Befestigungselement (5) belastet wird, aufweist.

2. Befestigungsvorrichtung nach Anspruch 1, **dadurch gekennzeichnet, dass** das Filtrierelement (3) zwischen der Masse (1) und dem Stutzen (4) eingeführt ist.

3. Befestigungsvorrichtung nach Anspruch 1 oder 2, **dadurch gekennzeichnet, dass** die Masse (1) allgemein zylinderförmig ist.

4. Befestigungsvorrichtung nach Anspruch 1, 2 oder 3, **dadurch gekennzeichnet, dass** die Masse (1) eine innere Schulter (1a) aufweist, die zwischen dem Stutzen (4) und der Kapsel (6) in Eingriff steht.

5. Betätigungskabel, **dadurch gekennzeichnet, dass** es an mindestens einem seiner Enden eine Befestigungsvorrichtung nach einem der vorhergehenden Ansprüche aufweist.
